# EUROPÄISCHE PATENTSCHRIFT

(11) **EP 0 735 307 B1**
(45) Veröffentlichungstag und Bekanntmachung des Hinweises auf die Patenterteilung: **11.06.1997**
(21) Anmeldenummer: 94119572.9
(22) Anmeldetag: 10.12.1994
(51) Int. Cl.: F16L 55/18, F16L 55/162

(54) **Vorrichtung und Verfahren zum Abdichten einer Rohrleitung und/oder von Einmündungsstellen von Zubringerrohren**
Method and apparatus for sealing a pipeline and/or the junction of a lateral pipe
Procédé et dispositif pour étancher une conduite et/ou la jonction d'un branchement latéral

(43) Veröffentlichungstag der Anmeldung: 02.10.1996
(73) Patentinhaber: PMO ENGINEERING AG, 8600 Dübendorf (CH)
(72) Erfinder: Müller, Paul, CH-8050 Zürich (CH)
(74) Vertreter: Steudtner, Werner, Dipl.-Ing.

(56) Entgegenhaltungen:
- EP-A- 0 540 892
- WO-A-89/08219
- WO-A-93/05334
- WO-A-96/07850
- GB-A- 2 270 730

## Beschreibung

Die Erfindung bezieht sich auf eine Vorrichtung zum Abdichten einer Rohrleitung und/oder von Einmündungsstellen von Zubringerrohren in die Rohrleitung mit einem in der Rohrleitung bewegbaren Transportmittel und einer an dem Transportmittel angebrachten, von Nachfülleinrichtungen losgelösten Abdichtmittelquelle sowie mit der Abdichtmittelquelle in Verbindung stehenden Mitteln zur Zuführung von Abdichtmittel zu der abzudichtenden Stelle.

Vorrichtungen dieser Art sind u.a. aus den Europäischen Patentschriften 0204694, 0211825, 0396696 und 0411338 sowie der Europäischen Patentanmeldung 94104447.1 und den Schweizer Patentschriften 640623 und 676495 bekannt. Bei diesen bekannten Vorrichtungen umfasst die Abdichtmittelquelle, die an dem in der Rohrleitung bewegbaren Transportmittel angebracht ist nur einen Abdichtmittelbehälter, der jeweils vor der Einführung der Abdichtmittelvorrichtung in die Rohrleitung mit Abdichtmittel aufgefüllt bzw. nachgefüllt wird. Als Abdichtmittel werden dabei in der Regel selbsthärtende Abdichtmittel verwendet, die nach Art von sogenannten Mehrkomponenten-Klebstoffen wie z.B. Araldit (eingetragene Schutzmarke) aus mehreren Abdichtmittelkomponenten zusammengesetzt sind, die vor der Einbringung in den Abdichtmittelbehälter innig miteinander vermischt werden und daher schon vom Zeitpunkt dieses Mischvorganges an miteinander zu reagieren und infolgedessen allmählich zu härten beginnen. Die Dauer des Härtungsvorganges hängt dabei einerseits von der Zusammensetzung der Abdichtmittelkomponenten und andererseits von der Temperatur der Mischung bzw. des fertig gemischten Abdichtmittels ab, so dass man beispielsweise mit einer geeigneten Zusammensetzung eine relativ lange Dauer des Abdichtvorganges erreichen und dadurch das Problem einer schon während der Abdichtarbeiten beginnenden Aushärtung des Abdichtmittels im Abdichtmittelbehälter vermeiden kann, dafür aber den Nachteil in Kauf nehmen muss, dass die Aushärtung des Abdichtmittels auch an der abzudichtenden Stelle nur relativ langsam vor sich geht und dadurch der gesamte Abdichtvorgang verhältnismässig lange dauert. Andererseits lässt sich mit anderen Zusammensetzungen auch eine relativ schnelle Aushärtung des Abdichtmittels an der abzudichtenden Stelle erreichen, aber mit solchen Zusammensetzungen läuft man dann Gefahr, dass sich das Abdichtmittel schon während der Abdichtarbeiten innerhalb des Abdichtmittelbehälters so weit verhärtet, dass es nur noch schwer oder unter ungünstigen Umständen gar nicht mehr aus dem Abdichtmittelbehälter ausgepresst werden kann und im Extremfall bis zur Rückführung des Transportwagens mit dem Abdichtmittelbehälter an seinen Ausgangspunkt gangspunkt schon so weit ausgehärtet ist, dass es sich nicht mehr aus dem Abdichtmittelbehälter entfernen lässt und daher der gesamte Abdichtmittelbehälter ausgewechselt werden muss. In diesem Zusammenhang ist u.a. aus der EP-A-0540892 auch schon ein Wechselbehälter mit Mischeinsatz bekannt geworden, mit dem solche, eine relativ schnelle Aushärtung des Abdichtmittels an der abzudichtenden Stelle gewährleistende Zusammensetzungen der Abdichtmittelkomponenten durch eine erst im Mischeinsatz erfolgende Vermischung der Komponenten ermöglicht werden könnten, aber praktisch würde bei diesem Wechselbehälter mit solchen Zusammensetzungen das Problem der zu schnellen Verhärtung des Abdichtmittels nur vom eigentlichen Abdichtmittelbehälter in den Mischeinsatz verlagert werden, d.h. der Wechselbehälter müsste dann nicht wegen Verhärtung des Abdichtmittels im Abdichtmittelbehälter sondern wegen Verhärtung des Abdichtmittels im Mischeinsatz ausgewechselt werden, was bezüglich der damit verbundenen Nachteile aber faktisch auf dasselbe hinauslaufen würde. Darüber hinaus hat dieser Wechselbehälter auch noch den schwerwiegenden Nachteil fehlender Mittel zur Erzielung eines vorbestimmten Mischungsverhältnisses der Abdichtmittelkomponenten sowie der fehlenden Möglichkeit einer nachträglichen Integration solcher Mittel in den Wechselbehälter, denn insbesondere bei solchen schnellhärtenden Zusammensetzungen ist die Einhaltung des erforderlichen Mischungsverhältnisses von wesentlicher Bedeutung, und da wegen der unterschiedlichen Zähigkeiten der Abdichtmittelkomponenten und der meist auch unterschiedlichen Temperaturabhängigkeit dieser Zähigkeiten eine Einhaltung des erforderlichen Mischungsverhältnisses ohne solche Mittel praktisch nicht möglich wäre, sind für diesen Wechselbehälter schnellhärtende Zusammensetzungen der Abdichtmittelkomponenten offensichtlich nicht vorgesehen. Die Vermischung der Abdichtmittelkomponenten erst an der abzudichtenden Stelle ist im übrigen auch schon aus der W0 93/05334 bekannt, aber auch dort lässt sich die Einhaltung eines vorbestimmten Mischungsverhältnisses der Abdichtmittelkomponenten insbesondere wegen der Temperaturabhängigkeit der unterschiedlichen Zähigkeiten der Abdichtmittelkomponenten nicht garantieren, und ausserdem hat das in dieser WO 93/05334 beschriebene Verfahren den entscheidenden Nachteil, dass die Abdichtmittelkomponenten der Mischeinrichtung von einer ausserhalb der Rohrleitung angeordneten Abdichtmittelquelle über Schlauchleitungen zugeführt werden und der starke Druckabfall über den Schlauchleitungen die maximale Länge derselben so weit beschränkt, dass sie bei erforderlichen grösseren Längen zwischen dem die Abdichtmittelquelle tragenden Bedienungswagen und der in der Rohrleitung bewegbaren Abdichteinrichtung nicht einsetzbar sind. Dieser entscheidende Nachteil ist auch bei dem den gleichen Gerätetyp wie die WO 93/05334 betreffenden (nicht vorveröffentlichten) Vorschlag nach der WO 96/07850 nicht behoben. Nun lässt sich zwar eine relativ schnelle Aushärtung des Abdichtmittels an der abzudichtenden Stelle auch ohne die mit schnellhärtenden Abdichtmitteln verbundene Gefahr einer Aushärtung des Abdichtmittels schon im Abdichtmittelbehälter erreichen, indem man ein relativ langsam aushärtendes Abdichtmittel verwendet und das Abdichtmittel dann an der abzudichtenden Stelle von aussen her auf eine so hohe Temperatur bringt, dass sich die Reaktionsgeschwindigkeit der Abdichtmittelkomponenten infolge der Temperaturerhöhung wesentlich erhöht, aber dies hat wiederum den Nachteil, dass besondere Heizmittel zur Erwärmung der abzudichtenden Stelle nach Zuführung des Abdichtmittels vorgesehen werden müssen und solche Heizmittel mit einem nicht unbeträchtlichen technischen Zusatzaufwand verbunden sind. Die Verwendung von nur einem Abdichtmittelbehälter, der jeweils vor der Einführung der Abdichtvorrichtung in die Rohrleitung mit zuvor aus den Abdichtmittelkomponenten gemischtem Abdichtmittel aufgefüllt bzw. nachgefüllt wird, bringt also in jedem Fall Nachteile mit sich, die entweder in einer langen Dauer des Abdichtvorganges an der abzudichtenden Stelle oder in der Gefahr eines Aushärtens des Abdichtmittels schon im Abdichtmittelbehälter oder in der Notwendigkeit eines nicht unerheblichen technischen Zusatzaufwandes bestehen. Ein weiterer, insbesondere bei schnellhärtenden Abdichtmitteln auftretender Nachteil der Verwendung von nur einem, mit fertig gemischtem Abdichtmittel gefüllten Abdichtmittelbehälter besteht darin, dass der Abdichtmittelbehälter nur ein relativ kleines Volumen oder genauer gesagt nur relativ geringe Distanzen zwischen der Behältermitte und den Behälterwänden haben darf, weil die Reaktion der Abdichtmittelkomponenten miteinander ein exothermer Prozess ist und sich daher das in der Behältermitte befindliche Abdichtmittel wegen seiner grössten Distanz zu den Behälterwänden und des sich daraus ergebenden grössten Wärmeleitwiderstandes nach aussen zu relativ zu dem übrigen im Behälter befindlichen Abdichtmittel am stärksten erhitzt und daher zuerst aushärtet und infolgedessen durch ein relativ geringes Volumen des Abdichtmittelbehälters bzw. relativ geringe Distanzen zwischen Behältermitte und Behälterwänden verhindert werden muss, dass die Temperatur des in der Behältermitte befindliche Abdichtmittels eine bestimmte maximal zulässige Temperatur überschreitet, damit eine Aushärtung von Abdichtmittel schon im dichtmittelbehälter vermieden wird. Das somit, jedenfalls bei der Verwendung von schnellhärtenden Abdichtmitteln, erforderliche geringe Volumen des Abdichtmittelbehälters ist insofern nachteilig, als der mittelbehälter wesentlich öfter nachgefüllt werden muss und der Transportwagen mit dem Abdichtmittelbehälter dazu jeweils zu seinem Ausgangspunkt zurückkehren muss. Ursache aller genannten Nachteile der bekannten Abdichtmittelvorrichtungen der eingangs genannten Art ist, dass zwischen dem Zeitpunkt des Vermischens der Abdichtmittelkomponenten und dem Zeitpunkt der Zuführung des dichtmittels zu der bzw. den abzudichtenden Stellen insbesondere bei dem zuletzt aus dem Abdichtmittelbehälter ausgepressten Abdichtmittel eine längere Zeit vergeht, während der die vermischten Abdichtmittelkomponenten miteinander reagieren und das Abdichtmittel daher auszuhärten beginnt.

Die der Erfindung zugrundeliegende Aufgabe war daher, eine Abdichtvorrichtung der eingangs genannten Art zu schaffen, die die genannten Nachteile der bekannten Abdichtmittelvorrichtungen nicht aufweist und bei der insbesondere ein Aushärten des Abdichtmittels schon innerhalb der Abdichtmittelquelle bzw. des Abdichtmittelbehalters sicher vermieden werden kann.

Erfindungsgemäss wird das bei einer Abdichtvorrichtung der eingangs genannten Art dadurch erreicht, dass die Abdichtmittelquelle mindestens folgende Bestandteile in Kombination miteinander umfasst:
a. mehrere Behälter in Form von Zylindern mit Kolben für eine entsprechende Anzahl von Abdichtmittelkomponenten,
b. Mittel zur Erzielung eines vorbestimmten Mischungsverhältnisses der Abdichtmittelkomponenten bei jeder Abgabe von Abdichtmittel aus der Abdichtmittelquelle dergestalt, dass die Produkte von Kolbenquerschnittsfläche und Kolbenbewegung der einzelnen Kolben in einem dem vorbestimmten Mischungsverhältnis der Abdichtmittelkomponenten entsprechenden Verhältnis zueinander stehen, und
c. eine mit den Behältern in Verbindung stehende, zur Herstellung des Abdichtmittels aus den Abdichtmittelkomponenten dienende Mischeinrichtung zur Vermischung der Abdichtmittelkomponenten.

Hauptvorteil der vorliegenden Abdichtvorrichtung ist die gleichzeitige Vermeidung aller Hauptnachteile der obengenannten vorbekannten Vorrichtungen, also die Vermeidung einer Verhärtung des Abdichtmittels im Abdichtmittelbehälter und/oder einem mit diesem kombinierten Misch- oder Homogenisierungseinsatz, die Vermeidung von vom vorbestimmten Mischungsverhältnis abweichenden Mischungsverhältnissen der Abdichtmittelkomponenten und die Vermeidung von zu geringen Aktionsradien der Abdichtmittelvorrichtung wegen Zuführung der Abdichtmittelkomponenten zur Mischeinrichtung über lange Schlauchleitungen und des starken Druckabfalles über denselben. Ein weiterer wesentlicher Vorteil der vorliegenden Abdichtvorrichtung liegt darin, dass jeweils nur soviel Abdichtmittel aus den Abdichtmittelkomponenten hergestellt wird, wie an der abzudichtenden Stelle gebraucht wird, so dass zeitliche Beschränkungen für die Dauer des Einsatzes der Abdichtvorrichtung bzw. für die Dauer der Abdichtarbeiten im wesentlichen wegfallen.

Eine bevorzugte Ausbildungsform hat den Vorteil, dass nicht mehr von der einen oder andern Abdichtmittelkomponente mit dem Transportwagen mitgeführt wird, als zur Herstellung des Abdichtmittels in dem gewünschten Mischungsverhältnis benötigt wird. Vorteilhaft kann dabei der Kolbenhub bei allen Zylindern gleichgross sein, wobei dann zur Erzielung des vorbestimmten Mischungsverhältnisses Mittel zur Erzielung von bei allen Zylindern jeweils im wesentlichen gleichen Abständen zwischen Kolbenfläche und Bewegungsendpunkt derselben vorzusehen sind. Der Vorteil eines solchen bei allen Zylindern gleichgrossen Kolbenhubes ist, dass entsprechend auch die Zylinder im wesentlichen gleich lang sind und sich damit eine gute Raumausnützung ergibt.

Zur Bewegung der Kolben in den Zylindern sind bei der bevorzugten Ausbildungsform zweckmässig Mittel zur Beaufschlagung der Kolbenrücken mit einem gasförmigen oder flüssigen Druckmedium vorgesehen. Das hat den Vorteil, dass auf mechanische Mittel zur Bewegung der Kolben in den Zylindern wie z.B. Kolbenstangen verzichtet werden kann und dadurch der von solchen mechanischen Mitteln benötigte Raum, wie z.B. bei Kolbenstangen ein nochmals etwa die Zylinderlänge aufweisender Raum, eingespart oder zur Vergrösserung der Hubräume der Zylinder und damit zur Vergrösserung der Mengen der mit dem Transportwagen mitgeführten Abdichtmittelkomponenten ausgenutzt werden kann. Vorteilhaft können dabei die Mittel zur Erzielung von bei allen Zylindern im wesentlichen gleichen Abständen zwischen Kolbenflächen und Bewegungsendpunkt derselben Mittel zum Umformen der translatorischen Bewegung des Kolbens in die Drehbewegung eines drehbaren Uebertragungsorganes umfassen. Auf diese Weise lässt sich die vorgenannte Raumeinsparung zweckmässig realisieren. Die Umformungsmittel können dabei vorteilhaft eine am Kolben angebrachte Kette und ein ausserhalb des Zylinders angeordnetes, das drehbare Uebertragungsorgan bildendes Kettenrad für die Kette umfassen. Anstelle von Kette und zugeordnetem Kettenrad können die Umformungsmittel aber vorteilhaft auch ein am Kolben angebrachtes Seil, vorzugsweise ein Drahtseil oder ein im wesentlichen nicht dehnbares Kunststoffseil, und eine das drehbare Uebertragungsorgan bildende Seilrolle für das Seil umfassen.

Eine mit solchen Umformungsmitteln zum Umformen der translatorischen Bewegung des bzw. der Kolben in Drehbewegungen von drehbaren Uebertragungsorganen versehene vorteilhafte Ausführungsform der vorliegenden Abdichtvorrichtung zeichnet sich durch mindestens ein kengetriebe mit einem drehfest mit dem bzw. den drehbaren Uebertragungsorganen verbundenen Zahnrad und einer von einem Schrittschaltmotor angetriebenen Schnecke und einem Impulsgeber für den Schrittschaltmotor aus. Bei einer ersten Variante dieser vorteilhaften Ausführungsform ist dabei nur ein einziges Schneckengetriebe vorgesehen, dessen Zahnrad mit den drehbaren Uebertragungsorganen der Umformungsmittel vom sämtlichen Kolben bzw. Zylindern drehfest verbunden ist, so dass sich bei Drehung des Schrittschaltmotors und damit des Zahnrades des Schneckengetriebes alle drehbaren Uebertragungsorgane mit dem Zahnrad mitdrehen und diese gleichzeitige Drehung aller Uebertragungsorgane über die den einzelnen Kolben bzw. Zylindern zugeordneten Umformungsmittel in gleichzeitige translatorische Bewegungen aller Kolben umgesetzt wird. Damit diese translatorischen Bewegungen aller Kolben gleichzeitig stattfinden, müssen die Kolbenrücken aller Kolben gleichzeitig mit dem genannten gasförmigen oder flüssigen Druckmedium beaufschlagt werden, so dass die Verbindungsmittel zwischen dem Kolbenrücken und dem jeweils zugeordneten drehbaren Uebertragungsorganen, also z.B. die genannten Ketten oder Seile, bei allen Kolben immer gespannt bleiben. Daher ergibt sich eine ständige relativ grosse Zugbelastung dieser Verbindungsmittel, die entweder massiv ausgebildete Verbindungsmittel oder zu geringerer Zugbelastung führende kleinere Druckflächen der Kolben erfordert, so dass diese erste Variante der genannten vorteilhaften Ausführungsform hauptsächlich für kleinere Abdichtvorrichtungen bzw. Abdichtvorrichtungen für engere Rohrleitungen in Betracht kommt. Der Vorteil dieser ersten Variante der genannten vorteilhaften Ausführungsform der vorliegenden Abdichtvorrichtung liegt in einem relativ geringen technischen Aufwand für Umformungsmittel und Schneckengetriebe, da bei dieser ersten Variante nur ein Schneckengetriebe und ein Schrittschaltmotor erforderlich ist und auch für die drehfeste Verbindung zwischen dem Zahnrad des Schneckengetriebes und den drehbaren Uebertragungsorganen nur eine Drehachse mit zwei Lagern notwendig ist. Bei einer zweiten Variante der genannten vorteilhaften Ausführungsform der vorliegenden Abdichtvorrichtung ist für jeden Zylinder ein Schneckengetriebe mit Zahnrad, Schnecke, Schrittschaltmotor und Impulsgeber für den Schrittschaltmotor und für jeden Impulsgeber ein Impulszähler zur Zählung der an den Schrittschaltmotor abgegebenen Impulse vorgesehen, und ferner sind Vergleichsmittel zum Vergleich der Zählerstände der den verschiedenen Zylindern zugeordneten Impulszähler vorgesehen. Bei dieser zweiten Variante ist zwar der technische Aufwand für die Schneckengetriebe, Schrittschaltmotoren und Drehachsen zwischen Schneckengetrieben und drehbaren Uebertragungsorganen bzw. deren Lagerung grösser als bei der ersten Variante, aber dafür kann hier die Zugbelastbarkeit der Verbindungsmittel zwischen Kolben und drehbarem Uebertragungsorgan wesentlich geringer gehalten werden, weil die Kolben hier nicht gleichzeitig mit Druckmedium von für alle Kolben gleichem Druck beaufschlagt werden, sondern jeder Kolben bzw. Kolbenrücken gesondert mit einem dem betreffenden Kolben zugeordneten Druck beaufschlagt wird, der gleich dem Gegendruck der Abdichtmittelkomponente auf die Kolbenfläche des betreffenden Kolbens zuzüglich einer zur sicheren Kolbenbewegung vorgesehenen Druckdifferenz ist, so dass die Verbindungsmittel zwischen den Kolben und den drehbaren Uebertragungsorganen jeweils nur mit einer dem Produkt aus dieser Druckdifferenz und der Kolbenfläche des betreffenden Kolbens entsprechenden Zuglast belastet werden. Diese zweite Variante der genannten vorteilhaften Ausführungsform der vorliegenden Abdichtvorrichtung eignet sich daher besonders auch für grössere Abdichtvorrichtungen bzw. Abdichtvorrichtungen für Rohrleitungen mit mittlerer oder grosser Rohrweite.

Eine andere mit solchen Umformungsmitteln zum Umformen der translatorischen Bewegung des Kolbens in eine Drehbewegung eines drehbaren Uebertragungsorganes versehene vorteilhafte Ausführungsform der vorliegenden Abdichtvorrichtung zeichnet sich durch mit dem drehbaren Uebertragungsorganen drehfest verbundene Mittel zur Messung des Drehwinkels der Drehbewegung des Uebertragungsorgans aus. Diese Ausführungsform hat gegenüber der obengenannten Ausführungsform mit mindestens einem Schneckengetriebe den Vorteil, dass die Verbindungsmittel zwischen Kolben und Uebertragungsorgan, also z.B. die genannte Kette bzw. das Seil, nur mit einer vernachlässigbar geringen Zugbelastung, die von einer zur Anspannung der Verbindungsmittel vorgesehenen Rückzugsfeder ausgeübt wird, belastet sind. Die vernachlässigbar geringe Zugbelastung wird dabei dadurch ermöglicht, dass auf den Kolbenrücken im Ruhezustand des Kolbens nur ein dem Gegendruck der Abdichtmittelkomponente auf die Kolbenfläche entsprechender Druck ausgeübt wird und zur Erzielung von jeweils kleinen Bewegungsschritten des Kolbens der Druck auf den Kolbenrücken um eine geringfügige Druckdifferenz erhöht wird, die im Verlaufe des Bewegungschrittes des Kolbens wieder nach Null geht. Mit den genannten Mitteln zur Messung des Drehwinkels der Drehbewegung des Uebertragungsorgans wird nun über die nannten Umformungsmittel jeweils die gesamte von dem zugeordneten Kolben ausgeführte translatorische Bewegung gemessen und mit der bzw. den auf die gleiche Weise gemessenen translatorischen Bewegungen der anderen Kolben verglichen, und jeweils auf den Kolbenrücken des Kolbens, der die geringste translatorische Bewegung ausgeführt hat, wird dann ein kurzzeitiger Druckstoss zur Erhöhung des auf den Kolbenrücken wirkenden Drucks um die genannte kleine Druckdifferenz gegeben, so dass also z.B. bei einer Abdichtvorrichtung mit zwei Behältern bzw. Zylindern auf die Kolbenrücken der beiden zugeordneten Kolben abwechselnd Druckstösse gegeben werden und die beiden Kolben sich daher abwechselnd in kleinen Bewegungsschritten vorwärtsbewegen und dementsprechend die Abstände zwischen Kolbenfläche und Bewegungsendpunkt derselben während der gesamten translatorischen Bewegung der Kolben immer im wesentlichen gleich bleiben bzw. sich höchstens um die Länge eines der genannten kleinen Bewegungsschritte der Kolben voneinander unterscheiden. Die Mittel zur Messung der translatorischen Bewegung der Kolben bzw. zur Messung des Drehwinkels der Drehbewegungen der drehbaren Uebertragungsorgane können dabei vorteilhaft jeweils ein Potentiometer, eine Spannungsquelle zur Erzeugung eines durch das Potentiometer fliessenden Stromes und Vergleichsmittel zum Vergleich der Spannungen an den Potentiometerabgriffen der den verschiedenen Zylindern zugeordneten Potentiometern umfassen.

Bei einer in Bezug auf die Raumausnützung besonders vorteilhaften Ausbildungsform der vorliegenden Abdichtvorrichtung sind die Behälter für die Abdichtmittelkomponenten ineinandergeschachtelte Zylinder, wobei mindestens einer der Behälter ein Ringzylinder mit einem darin bewegbaren Ringkolben ist. Diese Ausbildungsform ist besonders dann sehr vorteilhaft, wenn die Abdichtvorrichtung für enge Rohrleitungen vorgesehen ist und daher die äusseren Abmasse der Abdichtvorrichtung nicht nur in Längs- sondern auch in Querrichtung beschränkt sind. In diesem Fall kann nämlich der Durchmesser der äusseren Zylinderwand des äussersten Ringzylinders gleich den maximal zulässigen Querabmessungen der Abdichtvorrichtung gemacht werden, so dass sich bei vorgegebenen Hubräumen der Zylinder eine minimale Länge der Zylinder bzw. Behälter ergibt und dementsprechend auch die Abmessungen der Abdichtvorrichtung in Längsrichtung derselben relativ klein gehalten bzw. verringert werden können. Die relativ geringe Zylinderlänge bei dieser Ausbildungsform kann aber auch vorteilhaft dazu benutzt werden, die in den Zylindern bewegbaren Kolben, z.B. über zugeordnete Kolbenstangen, ausserhalb der Zylinder mechanisch schubfest miteinander zu verkoppeln. Dazu wird zwar, wie oben schon erwähnt, für die Kolbenstangen bei ausgefahrenen Kolben nochmals etwa die Zylinderlänge und somit annähernd der doppelte Raum wie für die Behälter allein benötigt, aber auch mit dieser erforderlichen doppelten Zylinderlänge wird die Gesamtlänge der Abdichtmittelquelle noch wesentlich geringer als bei Anordnung der die Behälter bildenden Zylinder nebeneinander und Anordnung der genannten Umformungsmittel zum Umformen der translatorischen Bewegungen der Kolben in Drehbewegungen von drehbaren Uebertragungsorganen hinter den nebeneinander angeordneten Zylindern, so dass der genannte Vorteil der guten Raumausnützung auch in diesem Falle nicht ganz verloren geht. Zusätzlich hat die mechanisch schübfeste Verkoppelung der Kolben miteinander den wesentlichen Vorteil, dass die besagten Umformungsmittel wegfallen können, weil durch die mechanische Kopplung der Kolben von vornherein eine gleichzeitige Bewegung der Kolben und gleiche Abstände der Kolbenflächen aller Kolben von ihren Bewegungsendpunkten gesichert sind und sich dementsprechend mit einer solchen mechanischen Kopplung der Kolben eine wesentliche Verringerung des technischen Aufwandes ergibt. Mit besonderem Vorteil kann sich die mechanische Kopplung zwischen den bewegbaren Kolben bzw. den daran angebrachten Kolbenstangen in einem mit den Zylindern auf der Zylinderrückseite verbundenen und ansonsten nach aussen druckdicht abgeschlossenen Raum befinden, und zur Bewegung der Kolben in den Zylindern können dabei vorteilhaft Mittel zur Beaufschlagung der Kolbenrücken mit über diesen druckdichten Raum zugeführten gasförmigen oder flüssigen Druckmedium vorgesehen sein. Das hat den wesentlichen Vorteil, dass über die Kopplungsmittel zwischen den Kolben praktisch keine Kräfte übertragen werden brauchen, weil die Kolben ja durch das auf ihre Kolbenrücken wirkende Druckmedium bewegt werden. Andererseits ist es aber durchaus möglich, die Kopplungsmittel zwischen den Kolben auch zur Kraftübertragung zwischen denselben zu benutzen. In diesem Fall können vorteilhaft alle für die Abdichtmittelkomponenten vorgesehenen Behälter ineinandergeschachtelte Ringzylinder mit darin bewegbaren Ringkolben sein, wobei dann in einem von den ineinandergeschachtelten Ringzylindern umgebenen zentralen kreiszylinderförmigen Hohlraum auf die mechanische Kopplung wirkende Mittel zur gleichzeitigen Bewegung aller Kolben miteinander vorgesehen sind und diese Bewegungsmittel vorzugsweise einen Druckzylinder oder eine nach Art einer Spindelpresse aufgebaute Bewegungsvorrichtung umfassen.

Wie oben schon erwähnt liegt der Hauptvorteil der vorliegenden Abdichtvorrichtung ja darin, dass der bei den bekannten Abdichtvorrichtungen auftretende Nachteil einer Verhärtung des Abdichtmittels schon im Abdichtmittelbehälter bei der vorliegenden Abdichtvorrichtung wegen der Trennung der Abdichtmittelkomponenten voneinander in verschiedenen Behältern ausgeschlossen ist und daher auch zeitliche Beschränkungen für die Dauer der Abdichtarbeiten in der Praxis kaum mehr auftreten, so dass bei der vorliegenden Abdichteinrichtung auch schnellhärtende Abdichtmittel verwendet werden können. Allerdings ist bei der Verwendung von schnellhärtenden Abdichtmitteln zu beachten, dass das in der Mischeinrichtung und in der Zuleitung von der Mischeinrichtung zu der abzudichtenden Stelle befindliche Abdichtmittel ja schon fertig gemischt ist und die Abdichtmittelkomponenten daher dort - ebenso wie bei den bekannten dichtvorrichtungen im Abdichtmittelbehälter - miteinander zu reagieren beginnen und sich das Abdichtmittel daher dort allmählich zu verhärten beginnt. In der Praxis geht dieser Vorgang der allmählichen Verhärtung des in der Mischeinrichtung und der Zuleitung zur abzudichtenden Stelle befindlichen Abdichtmittels aber sehr viel langsamer vor sich als in den Abdichtmittelbehältern der bekannten Abdichtvorrichtungen, weil der Abstand vom Zentrum zur Aussenwand der Mischeinrichtung und vom Zentrum der Zuleitung zur abzudichtenden Stelle zu der leitungsaussenwand wesentlich geringer als der Abstand von der Mitte eines Abdichtmittelbehälters zur Aussenwand desselben ist und die bei der Reaktion der in der Mischeinrichtung und der Zuleitung zur abzudichtenden Stelle befindlichen, miteinander vermischten Abdichtmittelkomponenten entstehende Reaktionswärme daher zum grössten Teil über die Aussenwände der Mischeinrichtung und der Zuleitung zur abzudichtenden Stelle nach aussen abgeführt wird, so dass sich das in der Mischeinrichtung und der Zuleitung zur abzudichtenden Stelle befindliche Abdichtmittel nur wenig über die Aussentemperatur hinaus erwärmt und daher auch die stark temperaturabhängige aktionsgeschwindigkeit der in der Mischeinrichtung und der Zuleitung zur abzudichtenden Stelle befindlichen miteinander vermischten Abdichtmittelkomponenten sehr niedrig bleibt und infolgedessen auch die besagte allmähliche Verhärtung des Abdichtmittels in der Mischeinrichtung und in der Zuleitung zur abzudichtenden Stelle wie schon gesagt nur sehr langsam vor sich geht. Um diesen allmählichen Verhärtungsvorgang des Abdichtmittels in der Mischeinrichtung und der Zuleitung zu der abzudichtenden Stelle noch weiter zu verzögern, können bei der vorliegenden Abdichtvorrichtung vorteilhaft Mittel zur Kühlung der Mischeinrichtung und vorzugsweise auch zur Kühlung der mit der Abdichtmittelquelle in Verbindung stehenden Mittel zur Zuführung von Abdichtmittel zu der abzudichtenden Stelle vorgesehen sein. Zweckmässig können diese Mittel zur Kühlung Mittel zur Erzeugung eines Luftstromes, vorzugsweise eines Pressluftstromes, und Mittel zum Vorbeiführen des Luftstromes an der Mischeinrichtung und vorzugsweise auch an den Mitteln zur Zuführung von Abdichtmittel zu der abzudichtenden Stelle umfassen, wobei zudem vorteilhaft Mittel zur Zuführung von Flüssigkeit zu dem Luftstrom zum Zwecke der Verursachung von Verdunstungskälte vorgesehen sein können.

Zur Erzielung einer sauberen Arbeitsweise der Abdichtmittelquelle und einer weitgehenden Vermeidung häufiger Reinigungsarbeiten kann es ferner bei der vorliegenden Abdichtvorrichtung von Vorteil sein, dass die in den Zylindern bewegbaren Kolben aus einem biegsamen Kunststoff bestehen und die Kolbenfläche derselben im Bereich ihres äusseren Randes mit einer ringförmigen Vertiefung versehen sind, so dass der die Vertiefung nach aussen zu begrenzende Endbereich der Kolbenwand bei Bewegung des Kolbens und dadurch verursachtem Druck der Abdichtmittelkomponente auf die äussere Begrenzung der Vertiefung an die Zylinderwand dicht angepresst wird und dadurch ein Hindurchfliessen von Abdichtmittelkomponente zwischen Kolbenwand und Zylinderwand praktisch verhindert wird. Eine solche Ausbildungsform hat den Vorteil, dass sich in dem Raum hinter dem Kolben nur sehr langsam zwischen Kolbenwand und Zylinderwand hindurchgeflossene dichtmittelkomponente ansammelt und entsprechend auch die notwendigen Reinigungsarbeiten zur Entfernung dieser angesammtelten Abdichtmittelkomponente nur in grösseren Zeitabständen vorgenommen werden müssen.

Die Erfindung betrifft ferner ein Verfahren zum Abdichten einer Rohrleitung unter Verwendung einer erfindungsgemässen Abdichtvorrichtung, bei dem das Abdichtmittel erst innerhalb der Rohrleitung an der bzw. den abzudichtenden Stellen durch Vermischen von Abdichtmittelkomponenten hergestellt wird. Zweckmässig wird dabei nur soviel Abdichtmittel durch vermischen entsprechender Mengen von Abdichtmittelkomponenten hergestellt, wie im Moment an der abzudichtenden Stelle verarbeitet wird.

Anhand der nachstehenden Figuren ist die Erfindung im folgenden an einigen Ausführungsbeispielen näher erläutert. Es zeigen
- Fig.1: ein Ausführungsbeispiel einer Abdichtmittelquelle einer Abdichtvorrichtung nach der Erfindung im Schnitt
- Fig.2: ein weiteres Ausführungsbeispiel einer Abdichtmittelquelle einer Abdichtvorrichtung nach der Erfindung im Schnitt

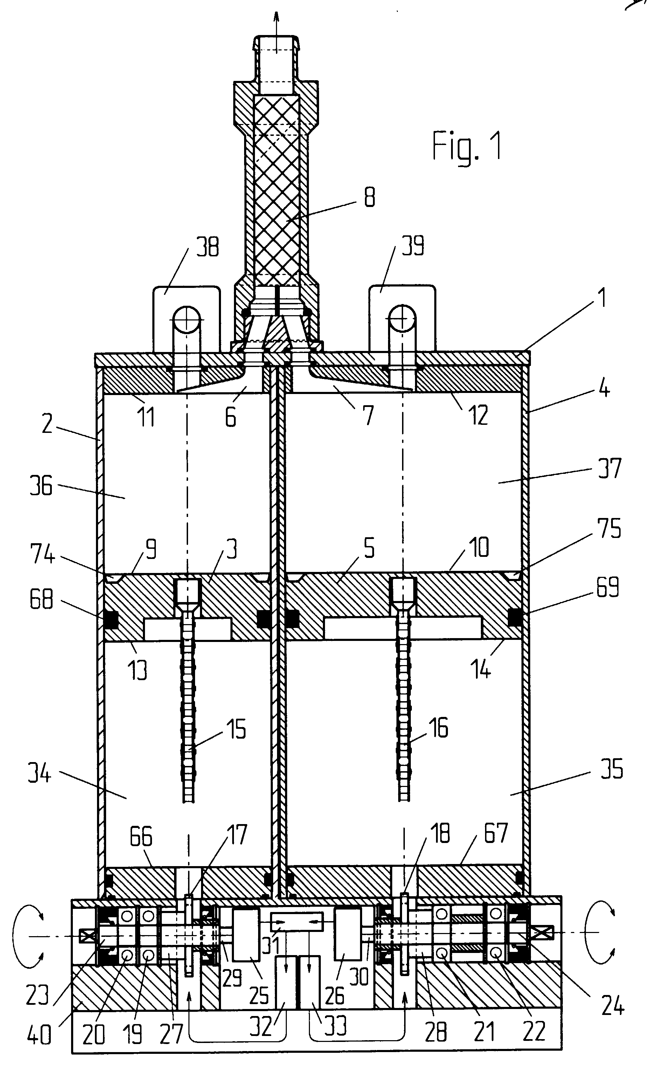

Die in Fig.1 gezeigte Abdichtmittelquelle 1 umfasst einen als Behälter für eine erste Abdichtmittelkomponente dienenden Zylinder 2 mit darin bewegbarem Kolben 3, einen als Behälter für eine zweite Abdichtmittelkomponente dienenden zweiten Zylinder 4 mit darin bewegbarem Kolben 5, eine mit den Zylindern 2 und 4 über Auslassleitungen 6 und 7 in Verbindung stehende, zur Herstellung des Abdichtmittels aus den Abdichtmittelkomponenten dienende Mischeinrichtung 8 zur Vermischung der Abdichtmittelkomponenten miteinander und Mittel zur Erzielung von bei beiden Zylindern 2 und 4 jeweils im wesentlichen gleichen Abständen zwischen Kolbenfläche 9 bzw. 10 und gungsendpunkt 11 bzw. 12 derselben. Die Mittel zur Erzielung von bei beiden Zylindern 2 und 4 im wesentlichen gleichen Abständen zwischen Kolbenfläche 9 bzw. 10 und Bewegungsendpunkt 11 bzw. 12 derselben umfassen Mittel zum Umformen der translatorischen Bewegungen der Kolben 3 und 5 in Drehbewegungen von drehbaren Uebertragungsorganen, die jeweils eine auf der Kolbenrückseite 13 bzw. 14 angebrachte Kette 15 bzw. 16 und ein ausserhalb des Zylinders 2 bzw. 4 angeordnetes, das drehbare Uebertragungsorgan bildendes Kettenrad 17 bzw. 18 für die Kette 15 bzw. 16 umfassen. Mit dem das drehbare Uebertragungsorgan bildenden Kettenrad 17 bzw. 18 ist zur Messung der Drehbewegung des Kettenrades 17 bzw. 18 und damit der translatorischen Bewegung des Kolbens 3 bzw. 5 über die mit Kugellagern 19 und 20 bzw. 21 und 22 gelagerte Welle 23 bzw. 24 jeweils ein Potentiometer 25 bzw. 26 verbunden. Ausserdem ist mit der Welle 23 bzw. 24 noch eine nach Art einer Uhrfeder ausgebildete Rückzugfeder 27 bzw. 28 verbunden, die zum Straffhalten der Kette 15 bzw. 16 dient, damit jede translatorische Bewegung des Kolbens 3 bzw. 5 exakt in eine entsprechende Drehbewegung der Welle 23 bzw. 24 und damit der mit dieser drehfest verbundenen Potentiometerwelle 29 bzw. 30 umgesetzt wird. Von einer in der Zeichnung nicht gezeigten Spannungsquelle wird dem Potentiometer 25 bzw. 26 ein durch den Potentiometerwiderstand fliessender konstanter Strom zugeführt, so dass am Potentiometerabgriff eine der Potentiometerstellung und damit dem Drehwinkel der Potentiometerwelle 29 bzw. 30 und dementsprechend der von dem Kolben 3 bzw. 5 ausgeführten translatorischen Bewegung exakt proportionale Spannung steht. Die an den Potentiometerabgriffen der Potentiometer 25 bzw. 26 liegenden Spannungen werden der Vergleichs- und Steuereinrichtung 31 zugeführt, die jeweils dasjenige der beiden Druckluftventile 32 und 33 öffnet, das dem Potentiometer 25 bzw. 26 mit der jeweils momentan niedrigeren Spannung am Potentiometerabgriff zugeordnet ist. Ueber das jeweils geöffnete Druckventil 32 bzw. 33 wird dem Druckraum 34 bzw. 35 hinter dem Kolben 3 bzw. 5 Druckluft zugeführt. Dadurch erhöht sich der Druck in dem Druckraum 34 bzw. 35 um eine kleine Druckdifferenz, so dass der Druck im Druckraum 34 bzw. 35 um diese kleine Druckdifferenz grösser als der auf die Kolbenfläche 9 bzw. 10 des Kolbens 3 bzw. 5 wirkende Gegendruck der im Behälterraum 36 bzw. 37 befindlichen Abdichtmittelkomponente wird. Infolgedessen wird der Kolben 3 bzw. 5 um einen kleinen Bewegungsschritt vorwärtsbewegt, und diese Vorwärtsbewegung wird über die Kette 15 bzw. 16 auf das Kettenrad 17 bzw. 18 übertragen und von diesem in eine kleine Drehbewegung der Potentiometerwelle 29 bzw. 30 des Potentiometers 25 bzw. 26 umgesetzt, so dass die Spannung am Potentiometerabgriff des Potentiometers 25 bzw. 26 um eine kleine Spannungsdifferenz ansteigt und damit grösser als die Spannung am Potentiometerabgriff des anderen Potentiometers 26 bzw. 25 wird. Infolgedessen wird daraufhin von der Vergleichs- und Steuereinheit 31 das bisher geöffnete Druckluftventil 32 bzw. 33 geschlossen und das andere Druckluftventil 33 bzw. 32 geöffnet, weil nunmehr die Spannung am Potentiometerabgriff des Potentiometers 26 bzw. 25 kleiner als die Spannung des Potentiometerabgriffs des anderen Potentiometers 25 bzw. 26 ist. Auf diese Weise führen die beiden Kolben 3 und 5 abwechselnd jeweils kleine Bewegungsschritte aus, so dass der Abstand der Kolbenflächen 9 und 10 der beiden Kolben 3 und 5 von ihren Bewegungsendpunkten 11 und 12 immer im wesentlichen gleich bleibt und der Mischeinrichtung 8 daher die beiden in den Behälterräumen 36 und 37 befindlichen Abdichtmittelkomponenten über die Auslassleitungen 6 und 7 im richtigen Mischungsverhältnis zugeführt werden. Wenn die Kolbenflächen 9 und 10 der Kolben 3 und 5 dann nahezu an ihren Bewegungsendpunkten 11 und 12 angelangt sind und die Abdichtarbeiten abgeschlossen sind, wird dann der in der Zeichnung nicht gezeigte Transportwagen, an dem die Abdichtmittelquelle 1 angebracht ist, wieder an seinen Ausgangspunkt zurückgefahren, wo dann die Zylinder 2 und 4 über die Zuführungsventile 38 und 39 wieder mit frischen Abdichtmittelkomponenten aufgefüllt werden. Dabei bewegen sich die Kolben 3 und 5 auf ihren Bewegungsanfangspunkt zurück und gleichzeitig werden mit Hilfe der Rückzugsfedern 27 und 28 auch die Potentiometer 25 und 26 wieder auf ihre Ausgangsstellung zurückgestellt.

Wie oben schon mehrfach erwähnt kommt es bei der vorliegenden Abdichtvorrichtung insbesondere dann, wenn sie für enge Rohrleitungen vorgesehen ist, auf eine möglichst gute Raumausnützung an, weil bei engen Rohrleitungen die Abmasse der Abdichtvorrichtung sowohl in Längs- wie auch in Querrichtung derselben beschränkt sind. Bei der in Fig.1 gezeigten Abdichtmittelquelle entspricht diese Beschränkung der Abmasse der Abdichtvorrichtung in Querrichtung derselben etwa einem Kreis dessen Durchmesser gleich der Breite der Tragplatte 40 in Fig.1 ist. Die beiden Zylinder 2 und 4 sind dabei innerhalb eines gedachten zylindrischen Hohlraumes mit gleichem Durchmesser wie dem des besagten Kreises angeordnet und berühren mit ihrem Aussenwänden jeweils längs einer gedachten, zur Zylinderachse parallelen Berührungslinie die Mantelfläche des gedachten zylindrischen Hohlraumes. Da beide Zylinder 2 und 4 wesentlich kleinere Durchmesser als der gedachte zylindrische Hohlraum haben, verbleibt daher über den Zylindern 2 und 4 innerhalb des gedachten zylindrischen Hohlraumes noch ein Freiraum, in dem die Videokamera untergebracht werden kann, die bei Abdichtvorrichtungen der eingangs genannten Art in der Regel vorgesehen und zur Beobachtung, Lenkung und Kontrolle der Abdichtarbeiten auch erforderlich ist. Anstelle der beiden nebeneinander angeordneten Zylinder 2 und 4 kann man aber - wie eingangs ebenfalls schon erwähnt - ineinandergeschachtelte Zylinder verwenden, wobei mindestens einer derselben ein Ringzylinder mit darin bewegbarem Ringkolben ist. In diesem Fall empfiehlt es sich, den Durchmesser der Aussenwand des äusseren Ringzylinders gleich dem Durchmesser des genannten gedachten zylindrischen Hohlraumes zu machen, weil damit die Abmasse der Abdichtmittelquelle in Längsrichtung der Abdichtvorrichtung wesentlich geringer als bei einem Aufbau wie in Fig.1 gemacht werden können. Zwar lässt sich in diesem Fall die Videokamera natürlich nicht mehr wie bei dem Aufbau in Fig.1 über den Zylindern anordnen, weil der genannte gedachte zylindrische Hohlraum dort ja von den besagten ineinandergeschachtelten Zylindern voll ausgefüllt ist, aber wegen der wesentlich geringeren Baulänge in diesem Falle und den sich damit ergebenden Raumeinsparungen in Längsrichtung der Abdichtvorrichtung reicht der Platz vor den ineinandergeschachtelten Zylindern in der Regel zur Unterbringung der Videokamera aus, insbesondere dann, wenn die Videokamera unmittelbar vor den ineinandergeschachtelten Zylindern und neben der Mischeinrichtung angeordnet wird.

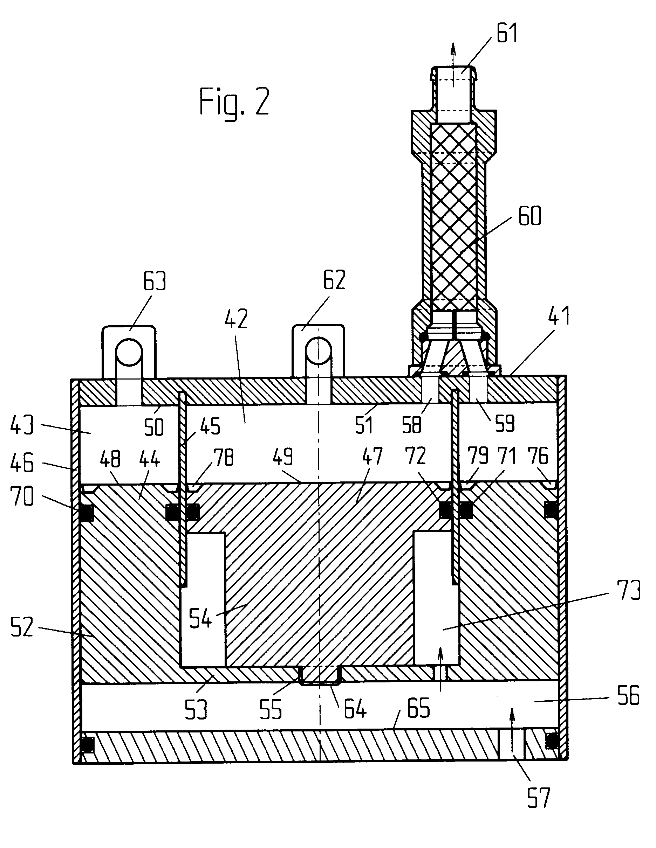

Fig.2 zeigt eine solche Abdichtmittelquelle 41 mit einandergeschachtelten Zylindern 42 und 43, von denen der äussere 43 ein Ringzylinder mit darin bewegbarem Ringkolben 44 ist. Die Aussenwand 45 des Zylinders 42 bildet dabei wie ersichtlich gleichzeitig die Innenwand des Ringzylinders 43. Die Aussenwand 46 des Ringzylinders 43 hat, wie ein Vergleich mit der Fig.1 zeigt, einen Durchmesser von der Breite der Tragplatte 40 in Fig.1 und damit den gleichen Durchmesser wie der besagte gedachte zylindrische Hohlraum, so dass die Abdichtmittelquelle 41 jedenfalls über die Länge ihrer ineinandergeschachtelten Zylinder 42 und 43 und der darin bewegbaren Kolben 47 und 44 den gedachten zylindrischen Hohlraum voll ausfüllt. Der Hubraum des Zylinders 42 ist gleich dem Hubraum des Zylinders 2 in Fig.1 und der Hubraum des Ringzylinders 43 gleich dem Hubraum des Zylinders 4 in Fig.1. Als Mittel zur Erzielung von bei beiden Zylindern 42 und 43 jeweils gleichen Abständen zwischen Kolbenfläche 48 bzw. 49 und Bewegungsendpunkt 50 bzw. 51 derselben dient bei der Abdichtmittelquelle 41 in Fig.2 eine schubfeste Verbindung zwischen den Kolben 44 und 47, die von der rückwärtigen Verlängerung 52 des Ringkolbens 44, der mit derselben einstückig verbundenen Scheibe 53 und dem mit dem Kolben 47 einstückig verbundenen zylindrischen Verbindungsstück 54 sowie der Schraubverbindung 55 zwischen dem zylindrischen Verbindungsstück 54 und der Scheibe 53 gebildet wird. Aufgrund dieser schubfesten Verbindung zwischen den Kolben 44 und 47 kann auf die bei der Abdichtmittelquelle 1 in Fig.1 zur Platzeinsparung vorgesehenen Umformungsmittel zum Umformen der translatorischen Bewegungen der Kolben in Drehbewegungen von drehbaren Uebertragungsorganen, die dort als Mittel zur Erzielung von bei beiden Zylindern im wesentlichen gleichen Abständen zwischen Kolbenflächen und Bewegungsendpunkten derselben dienen, verzichtet werden, was nicht unbeträchtliche Einsparungen an technischem Aufwand mit sich bringt. Zur gemeinsamen Bewegung der beiden Kolben 44 und 47 in den Zylindern 43 und 42 wird dem Druckraum 56 über den Zuführungskanal 57 Druckluft zugeführt, wodurch die Kolben 44 und 47 in Richtung ihrer Bewegungsendpunkte 50 bzw. 51 verschoben werden und infolgedessen die in den Zylindern 43 und 42 befindlichen beiden Abdichtmittelkomponenten im richtigen Mischungsverhältnis zueinander über die Auslassleitungen 58 und 59 der Mischeinrichtung 60 zugeführt und dort miteinander vermischt und als fertig gemischtes Abdichtmittel am Ausgang 61 der Mischeinrichtung 60 an die in der Zeichnung nicht gezeigte Zuleitung zu der abzudichtenden Stelle abgegeben werden. Wenn die Kolbenflächen ihren48 bzw. 49 der Kolben 44 bzw. 47 dann nahezu an Bewegungsendpunkten 50 bzw. 51 angelangt sind und die Abdichtarbeiten abgeschlossen sind, wird der in der Zeichnung nicht gezeigte Transportwagen, an dem die Abdichtmittelquelle 41 angebracht ist, wieder an seinen Ausgangspunkt zurückgefahren, wo dann die Zylinder 42 und 43 über die Zuführungsventile 62 und 63 wieder mit frischen Abdichtmittelkomponenten aufgefüllt werden. Dabei bewegen sich die Kolben 43 und 47 auf ihren Bewegungsanfangspunkt zu, bis die Frontseite 64 der Schraube der Schraubverbindung 55 an der Bodenplatte 65 anstösst und die Kolben 44 und 47 damit wieder ihren Bewegungsanfangspunkt erreicht haben.

Zu der von Zeit zu Zeit erforderlichen Reinigung der Abdichtmittelquelle 1 in Fig.1 bzw. der Abdichtmittelquelle 41 in Fig.2 werden die Zylinder 2 und 4 bzw. die verlängerte Aussenwand 46 des Zylinders 43 von ihren Bodenplatten 66 und 67 bzw. 65 abgezogen und dann die Kolben 3 und 5 bzw. 44 und 47 aus den Zylindern 2 und 4 bzw. 42 und 43 herausgezogen, und anschliessend werden die Zylinder 2 und 4 bzw. 42 und 43 zusammen mit der Mischeinrichtung 8 bzw. 60 in ein Lösungsmittel gelegt, in das auch die Kolben 3 und 5 bzw. 44 und 47 nach Entfernung der Dichtungsringe 68 und 69 bzw. 70, 71 und 72 eingebracht werden. Die Reinigung erfolgt dann entweder selbsttätig in dem Lösungsmittel oder kann auch durch spülen und abwaschen von Hand unterstützt werden.

Notwendig wird eine solche Reinigung immer dann, wenn im Verlaufe des Betriebes der Abdichtmittelquelle 1 bzw. 41 zwischen den Kolbenwänden der Kolben 3 und 5 bzw. 44 und 47 und den Zylinderwänden der Zylinder 2 und 4 bzw. 42 und 43 nach und nach eine grössere Menge Abdichtmittelkomponente hindurchgeflossen ist und sich in den Druckräumen 34 und 35 bzw. 56 und 73 hinter den Kolben 3 und 5 bzw. 44 und 47 angesammelt hat, weil die sich dort ansammelnden Abdichtmittelkomponenten natürlich die Rückbewegung der Kolben 3 und 5 bzw. 44 und 47 zu ihrem Bewegungsanfangspunkt verhindern bzw. behindern. Aus diesem Grunde ist man in der Regel bestrebt, die Menge der zwischen Kolbenwand und Zylinderwand hindurchfliessenden Abdichtmittelkomponenten möglichst auf ein Minimum zu beschränken. Bei den in den Figuren 1 und 2 gezeigten Abdichtmittelquellen 1 und 41 wird das dadurch erreicht, dass die Kolben 3 und 5 bzw. 44 und 47 aus einem biegsamen Kunststoff bestehen und die Kolbenflächen 9 und 10 bzw. 48 und 49 derselben im Bereich ihrer äusseren Ränder mit ringförmigen Vertiefungen 74 und 75 bzw. 76, 77 und 78 versehen sind, so dass der die Vertiefung nach aussen zu begrenzende Endbereich der Kolbenwand bei Bewegung des Kolbens und dadurch verursachtem Druck der Abdichtmittelkomponente auf die äussere Begrenzung der Vertiefung an die Zylinderwand dicht angepresst wird und dadurch ein Hindurchfliessen von Abdichtmittelkomponente zwischen Kolbenwand und Zylinderwand praktisch verhindert wird. Was dann dennoch an diesen Stellen an Abdichtmittelkomponente hindurchfliesst, wird von den Dichtungsringen 68 und 69 bzw. 70, 71 und 72 abgefangen, so dass die in die Druckräume 34 und 35 bzw. 56 und 73 gelangenden Mengen an Abdichtmittelkomponenten äusserst gering gehalten werden können und dadurch auch die Zeitabstände zwischen aufeinanderfolgende Reinigungen relativ gross gemacht werden können.

## Patentansprüche

1. Vorrichtung zum Abdichten einer Rohrleitung und/oder von Einmündungsstellen von Zubringerrohren in die Rohrleitung mit einem in der Rohrleitung bewegbaren Transportmittel und einer an dem Transportmittel angebrachten, von Nachfülleinrichtungen losgelösten Abdichtmittelquelle (1; 41) sowie mit der Abdichtmittelquelle in Verbindung stehenden Mitteln zur Zuführung von Abdichtmittel zu der abzudichtenden Stelle, dadurch gekennzeichnet, dass die Abdichtmittelquelle (1; 41) mindestens folgende Bestandteile in Kombination miteinander umfasst:
a. mehrere Behälter in Form von Zylindern (2, 4; 42, 43) mit Kolben (3, 5; 44, 47) für eine entsprechende Anzahl von Abdichtmittelkomponenten,
b. Mittel (15 - 33; 52 - 55) zur Erzielung eines vorbestimmten Mischungsverhältnisses der Abdichtmittelkomponenten bei jeder Abgabe von Abdichtmittel aus der Abdichtmittelquelle dergestalt, dass die Produkte von Kolbenquerschnittsfläche und Kolbenbewegung der einzelnen Kolben (3, 5; 44, 47) in einem dem vorbestimmten Mischungsverhältnis der Abdichtmittelkomponenten entsprechenden Verhältnis zueinander stehen, und
c. eine mit den Behältern (2, 4; 42, 43) in Verbindung stehende, zur Herstellung des Abdichtmittels aus den Abdichtmittelkomponenten dienende Mischeinrichtung (8; 60) zur Vermischung der Abdichtmittelkomponenten.

2. Vorrichtung nach Anspruch 1, dadurch gekennzeichnet, dass der Kolbenhub bei allen Zylindern (2,4;42,43) gleichgross ist und zur Frzielung des vorbestimmten Mischungsverhältnisses Mittel (15-33;52-55) zur Erzielung von bei allen Zylindern (2,4;42,43) jeweils im wesentlichen gleichen Abstanden zwischen Kolbenfläche (9,10;48,49) und Bewegungsendpunkt (11,12;50,51) derselben vorgesehen sind.

3. Vorrichtung nach Anspruch 1 oder 2 dadurch gekennzeichnet, dass zur Bewegung der Kolben in den Zylindern Mittel (31-35;56,57,73) zur Beaufschlagung der Kolbenrücken (13,14) mit einem gasförmigen oder flüssigen Druckmedium vorgesehen sind.

4. Vorrichtung nach Anspruch 3, dadurch gekennzeichnet, dass die Mittel (15,16) zur Erzielung von bei allen Zylindern im wesentlichen gleichen Abständen zwischen Kolbenflächen und Bewegungsendpunkt derselben Mittel zum Umformen der translatorischen Bewegung des Kolbens (3,5) in die Drehbewegung eines drehbaren Uebertragungsorganes (17,18) umfassen.

5. Vorrichtung nach Anspruch 4, dadurch gekennzeichnet, dass die Umformungsmittel eine am Kolben (3,5) angebrachte Kette (15,16) und ein ausserhalb des Zylinders (2,4) angeordnetes, das drehbare Uebertragungsorgan bildendes Kettenrad (17,18) für die Kette (15,16) umfassen.

6. Vorrichtung nach Anspruch 4, dadurch gekennzeichnet, dass die Umformungsmittel ein am Kolben angebrachtes Seil, vorzugsweise ein Drahtseil oder ein im wesentlichen nicht dehnbares Kunststoffseil, und eine das drehbare Uebertragungsorgan bildende Seilrolle für das Seil umfassen.

7. Vorrichtung nach einem der Ansprüche 4 bis 6, gekennzeichnet durch mindestens ein Schneckengetriebe mit einem drehfest mit dem drehbaren Uebertragungsorgan verbundenen Zahnrad und einer von einem Schrittschaltmotor angetriebenen Schnecke und einem Impulsgeber für den Schrittschaltmotor.

8. Vorrichtung nach Anspruch 7, dadurch gekennzeichnet, dass für jeden Zylinder ein Schneckengetriebe mit Zahnrad, Schnecke, Schrittschaltmotor und Impulsgeber für den Schrittschaltmotor und für jeden Impulsgeber ein Impulszähler zur Zahlung der an den Schrittschaltmotor abgegebenen Impulse vorgesehen ist und dass weiter Vergleichsmittel zum Vergleich der Zahlerstände der den verschiedenen Zylindern zugeordneten Impulszähler vorgesehen sind.

9. Vorrichtung nach einem der Ansprüche 4 bis 6, gekennzeichnet durch mit dem drehbaren Uebertragungsorgan (17,18) drehfest verbundene Mittel (23-30) zur Messung des Drehwinkels der Drehbewegung des Uebertragungsorgans (17,18).

10. Vorrichtung nach Anspruch 9, dadurch gekennzeichnet, dass die Mittel zur Messung des Drehwinkels ein Potentiometer (25,26), eine Spannungsquelle zur Erzeugung eines durch das Potentiometer (25,26) fliessenden Stromes und Vergleichsmittel (31) zum Vergleich der Spannungen an den Potentiometerabgriffen der den verschiedenen Zylindern zugeordneten Potentiometer umfassen.

11. Vorrichtung nach Anspruch 2, dadurch gekennzeichnet, dass die Behälter ineinandergeschachtelte Zylinder (42,43) sind und mindestens einer der Behälter ein Ringzylinder (43) mit einem darin bewegbaren Ringkolben (44) ist.

12. Vorrichtung nach Anspruch 11, dadurch gekennzeichnet, dass die in den Zylindern (42,43) bewegbaren Kolben (44,47) ausserhalb der Zylinder (42,43) mechanisch schubfest miteinander verkoppelt sind.

13. Vorrichtung nach Anspruch 12, dadurch gekennzeichnet, dass sich die mechanische Verkopplung zwischen den bewegbaren Kolben bzw. den daran angebrachten Kolbenstangen in einem mit den Zylindern auf der Zylinderrückseite verbundenen und ansonsten nach aussen druckdicht abgeschlossenen Raum befindet und zur Bewegung der Kolben in den Zylindern Mittel zur Beaufschlagung der Kolbenrücken mit über diesen druckdichten Raum zugeführtem gasförmigen oder flüssigen Druckmedium vorgesehen sind.

14. Vorrichtung nach Anspruch 12, dadurch gekennzeichnet, dass alle Behälter ineinandergeschachtelte Ringzylinder mit darin bewegbaren Ringkolben sind und in einem von den ineinandergeschachtelten Ringzylindern umgebenen zentralen kreiszylinderförmigen Hohlraum auf die mechanische Verkopplung wirkende Mittel zur gleichzeitigen Bewegung aller Kolben miteinander vorgesehen sind und diese Bewegungsmittel vorzugsweise einen Druckzylinder oder eine nach Art einer Spindelpresse aufgebaute Bewegungsvorrichtung umfassen.

15. Vorrichtung nach einem der Ansprüche 1 bis 14, dadurch gekennzeichnet, dass Mittel zur Kühlung der Mischeinrichtung (8;60) und vorzugsweise auch zur Kühlung der mit der Abdichtmittelquelle (1;41) in Verbindung stehenden Mittel zur Zuführung von Abdichtmittel zu der abzudichtenden Stelle vorgesehen sind.

16. Vorrichtung nach Anspruch 15, dadurch gekennzeichnet, dass die Mittel zur Kühlung Mittel zur Erzeugung eines Luftstromes, vorzugsweise eines Pressluftstromes, und Mittel zum Vorbeiführen des Luftstromes an der Mischeinrichtung (8;60) und vorzugsweise auch an den Mitteln zur Zuführung von Abdichtmittel zu der abzudichtenden Stelle umfassen und ferner vorzugsweise Mittel zur Zuführung von Flüssigkeit zu dem Luftstrom zum Zwecke der Verursachung von Verdunstungskälte vorgesehen sind.

17. Vorrichtung nach einem der Ansprüche 1 bis 16, dadurch gekennzeichnet, dass die in den Zylindern (2,4;42,43) bewegbaren Kolben (3,5;44,47) aus einem biegsamen Kunststoff bestehen und die Kolbenflächen (9,10;48,49) derselben im Bereich ihres ausseren Randes mit einer ringförmigen Vertiefung (74,75;76,77,78) versehen sind, so dass der die Vertiefung (74,75;76,77,78) nach aussen zu begrenzende Endbereich der Kolbenwand bei Bewegung des Kolbens (3,5;44,47) und dadurch verursachtem Druck der Abdichtmittelkomponente auf die aussere Begrenzung der Vertiefung (74,75;76,77,78) an die Zylinderwand dicht angepresst wird und dadurch ein Hindurchfliessen von Abdichtmittelkomponente zwischen Kolbenwand und Zylinderwand praktisch verhindert wird.

18. Verfahren zum Abdichten einer Rohrleitung unter Verwendung einer Vorrichtung nach einem der Ansprüche 1 bis 17, bei dem das Abdichtmittel erst innerhalb der Rohrleitung an der bzw. den abzudichtenden Stellen durch Vermischen von Abdichtmittelkomponenten hergestellt wird.

19. Verfahren nach Anspruch 18, dadurch gekennzeichnet, dass jeweils nur soviel Abdichtmittel durch Vermischen entsprechender Mengen von Abdichtmittelkomponenten hergestellt wird, wie im Moment an der abzudichtenden Stelle verarbeitet wird.

## Claims

1. Apparatus for sealing a pipeline and/or junctions of feeder pipes with the pipeline, having a transporting means movable in the pipeline and a sealant source (1; 41) attached to the transporting means and dissociated from refilling devices, and having means, in connection with the sealant source, for supplying sealant to the place to be sealed, characterised in that the sealant source (1; 41) comprises at least the following elements in combination with one another:
a. a plurality of containers in the form of cylinders (2, 4; 42, 43) having pistons (3, 5; 44, 47) for a corresponding number of sealant components,
b. means (15 - 33; 52 - 55) for obtaining a predetermined mixture ratio of the sealant components upon each dispensing of sealant from the sealant source, such that the products of piston cross-sectional area and piston movement of the individual pistons (3, 5; 44, 47) are in a ratio to one another corresponding to the predetermined mixture ratio of the sealant components, and
c. a mixing device (8; 60) for mixing the sealant components and serving to produce the sealant from the sealant components, which mixing device is in connection with the containers (2, 4; 42, 43).

2. Apparatus according to Claim 1, characterised in that the piston stroke is of the same extent in all the cylinders (2,4; 42,43) and, to obtain the predetermined mixture ratio, means (15-33; 52-55) are provided for obtaining in all the cylinders (2,4; 42,43) in each case substantially equal distances between piston area (9,10; 48,49) and movement end point (11,12;50,51) of the same.

3. Apparatus according to Claim 1 or 2, characterised in that, for the movement of the pistons in the cylinders, means (31-35;56,57,73) are provided for pressurising the piston backs (13,14) with a gaseous or liquid pressure medium.

4. Apparatus according to Claim 3, characterised in that the means (15,16) for obtaining in all the cylinders substantially equal distances between piston areas and movement end point of the same comprise means for transforming the translatory movement of the piston (3,5) into the rotary movement of a rotatable transmission member (17,18).

5. Apparatus according to Claim 4, characterised in that the transforming means comprise a chain (15,16) attached to the piston (3,5) and a sprocket (17,18) for the chain (15,16), which sprocket is arranged outside the cylinder (2,4) and forms the rotatable transmission member.

6. Apparatus according to Claim 4, characterised in that the transforming means comprise a rope attached to the piston, preferably a wire rope or a substantially non-extensible plastic rope, and a rope pulley for the rope, which rope pulley forms the rotatable transmission member.

7. Apparatus according to one of Claims 4 to 6, characterised by at least one worm gearing having a toothed wheel connected in a rotationally fixed manner to the rotatable transmission member, and a worm driven by a step motor, and a pulse generator for the step motor.

8. Apparatus according to Claim 7, characterised in that for each cylinder a worm gearing having a toothed wheel, worm, step motor and pulse generator for the step motor is provided and for each pulse generator a pulse counter for counting the pulses delivered to the step motor is provided and in that, further, comparing means for comparing the counts of the pulse counters assigned to the different cylinders are provided.

9. Apparatus according to one of claims 4 to 6, characterised by means (23-30), connected in a rotationally fixed manner to the rotatable transmission member (17,18), for measuring the angle of rotation of the rotary movement of the transmission member (17,18).

10. Apparatus according to Claim 9, characterised in that the means for measuring the angle of rotation comprise a potentiometer (25,26), a voltage source for generating a current which flows through the potentiometer (25,26), and comparing means (31) for comparing the voltages at the potentiometer taps of the potentiometers assigned to the different cylinders.

11. Apparatus according to Claim 2, characterised in that the containers are nested cylinders (42,43) and at least one of the containers is an annular cylinder (43) having an annular piston (44) movable therein.

12. Apparatus according to Claim 11, characterised in that the pistons (44,47) movable in the cylinders (42,43) are mechanically coupled to each other outside the cylinders (42,43) in a shear-resistant manner.

13. Apparatus according to Claim 12, characterised in that the mechanical coupling between the movable pistons, or the piston rods attached thereto, is situated in a space connected to the cylinders on the rear side of the cylinders and otherwise closed off pressure-tightly to the outside, and for the movement of the pistons in the cylinders means are provided for pressurising the piston backs with gaseous or liquid pressure medium supplied via this pressure-tight space.

14. Apparatus according to Claim 12, characterised in that all the containers are nested annular cylinders having annular pistons movable therein, and in a central circular-cylindrical hollow space surrounded by the nested annular cylinders there are provided means, acting on the mechanical coupling, for the simultaneous movement of all the pistons together, and these movement means preferably comprise a pressure cylinder or a movement apparatus constructed in the manner of a screw press.

15. Apparatus according to one of Claims 1 to 14, characterised in that means are provided for cooling the mixing device (8;60) and preferably also for cooling the means, in connection with the sealant source (1;41), for supplying sealant to the place to be sealed.

16. Apparatus according to Claim 15, characterised in that the means for cooling comprise means for generating an air current, preferably a compressed-air current, and means for guiding the air current past the mixing device (8;60) and preferably also past the means for supplying sealant to the place to be sealed, and, furthermore, means are preferably provided for supplying liquid to the air current for the purpose of causing latent heat of evaporation.

17. Apparatus according to one of Claims 1 to 16, characterised in that the pistons (3,5;44,47) movable in the cylinders (2,4;42,43) consist of a flexible plastic and the piston areas (9,10;48,49) of the same are provided in the region of their outer edge with an annular recess (74,75;76,77,78), so that the end region, which is to bound the recess (74,75;76,77,78) outwardly, of the piston wall is tightly pressed against the cylinder wall as the piston (3,5;44,47) moves and thereby causes pressure of the sealant component on the outer boundary of the recess (74,75;76,77,78), and a throughflow of sealant component between piston wall and cylinder wall is thereby virtually prevented.

18. Method for sealing a pipeline using an apparatus according to one of Claims 1 to 17, in which the sealant is only produced inside the pipeline at the place(s) to be sealed, by mixing sealant components.

19. Method according to claim 18, characterised in that in each case only as much sealant is produced, by mixing appropriate amounts of sealant components, as is being processed at the time at the place to be sealed.

## Revendications

1. Dispositif pour rendre étanche une canalisation et/ou des endroits d'entrée de tuyaux d'amenée dans la canalisation, avec un moyen de transport déplaçable dans la canalisation et une source de moyen d'étanchement fixée au moyen de transport, désolidarisée des dispositifs de remplissage (1; 41) et avec des moyens en liaison avec la source de moyen d'étanchement pour amener le moyen d'étanchement à l'endroit à rendre étanche, caractérisé en ce que la source de moyen d'étanchement (1; 41) comporte au moins les composants suivants en combinaison :
a. plusieurs récipients sous la forme de cylindres (2, 4; 42, 43) avec des pistons (3, 5; 44, 47) pour un nombre correspondant de composants de moyen d'étanchement,
b. des moyens (15-33;52-55) pour obtenir un rapport de mélange prédéterminé des composants de moyen d'étanchement à chaque émission du moyen d'étanchement de la source de moyen d'étanchement de telle sorte que les produits de la face en section transversale du piston et du déplacement des différents pistons (3, 5; 44, 47) sont en un rapport correspondant au rapport de mélange prédéterminé des composants de moyen d'étanchement les uns aux autres et
c. un dispositif de mélange (8, 60) en liaison avec les récipients (2, 4; 42, 43), servant à préparer le moyen d'étanchement à partir des composants de moyen d'étanchement pour mélanger les composants de moyen d'étanchement.

2. Dispositif selon la revendication 1, caractérisé en ce que la course de piston est identique pour tous les cylindres (2, 4; 42, 43) et que pour obtenir le rapport de mélange prédéterminé, des moyens (15-33; 52-55) sont prévus pour obtenir pour tous les cylindres (2, 4; 42, 43) respectivement des écarts essentiellement identiques entre les surfaces de piston (9, 10; 48, 49) et le point final de déplacement (11, 12, 50, 51) de ceux-ci.

3. Dispositif selon la revendication 1 ou 2, caractérisé en ce que pour le déplacement des pistons dans les cylindres, des moyens (31-35; 56, 57, 73) sont prévus pour charger les dos de piston (13, 14) d'un milieu de pression gazeu ou liquide.

4. Dispositif selon la revendication 3, caractérisé en ce que les moyens (15, 16) pour obtenir pour tous les cylindres des écarts essentiellent identiques entre les surfaces de piston et le point final de déplacement de ceux-ci comportent des moyens pour transformer le mouvement de translation du piston (3, 5) en mouvement de rotation d'un organe de transmission tournant (17, 18).

5. Dispositif selon la revendication 4, caractérisé en ce que les moyens de transformation comportent une chaine (15, 16) disposée au piston (3, 5) et une roue à chaine (17, 18) pour la chaine (15, 16) disposée à l'extérieur du cylindre (2, 4) et constituant l'organe de transmission tournant.

6. Dispositif selon la revendication 4, caractérisé en ce que les moyens de transformation comportent un câble disposé au piston, de préférence un câble métallique ou un câble en matière synthétique essentiellement non extensible et une poulie pour le câble formant l'organe de transmission tournant.

7. Dispositif selon l'une des revendication 4 à 6, caractérisé par au moins un engrenage à vis sans fin avec une roue dentée reliée immobile en rotation, à l'organe de transmission tournant et une vis sans fin entraînée par un moteur pas à pas et un générateur d'impulsions pour le moteur pas à pas.

8. Dispositif selon la revendication 7, caractérisé en ce que sont prévus pour chaque cylindre un engrenage à vis sans fin avec une roue dentée, une vis sans fin, un moteur pas à pas et un générateur d'impulsions pour le moteur pas à pas ainsi que pour chaque générateur d'impulsions un compteur d'impulsions pour compter les impulsions émises au moteur pas à pas, et en ce que sont prévus en outre des moyens de comparaison pour comparer les états des compteurs d'impulsions associés aux différents cylindres.

9. Dispositif selon l'une des revendication 4 à 6, caractérisé par des moyens (23-30) reliés, immobiles en rotation, à l'organe de transmission tournant (17, 18) pour mesurer l'angle de rotation du mouvement de rotation de l'organe de transmission (17, 18).

10. Dispositif selon la revendication 9, caractérisé en ce que les moyens pour mesurer l'angle de rotation comportent un potentiomètre (25, 26), une source de tension pour produire un courant passant à travers le potentiomètre (25, 26) et des moyens de comparaison (31) pour comparer les tensions aux prises des potentiomètres associés aux différents cylindres.

11. Dispositif selon la revendication 2, caractérisé en ce que les récipients sont des cylindres emboîtés l'un dans l'autre (42, 43) et qu'au moins l'un des récipients est un cylindre annulaire (43) avec un piston annulaire (44) déplaçable dans celui-ci.

12. Dispositif selon la revendication 11, caractérisé en ce que les pistons (44, 47) déplaçables dans les cylindres (42, 43) sont accouplés mécaniquement de façon solidaire en poussée à l'extérieur des cylindres (42, 43).

13. Dispositif selon la revendication 12, caractérisé en ce que l'accouplement mécanique entre les pistons déplaçables et, respectivement les tiges de piston fixées à ceux-ci se situe dans une enceinte reliée aux cylindres sur le côté arrière des cylindres et fermée sinon de manière étanche à la pression vers l'extérieur, et que pour le déplacement des pistons dans les cylindres, des moyens sont prévus pour charger le dos des pistons en milieu de pression gazeux ou liquide amené à travers cette enceinte étanche à la pression.

14. Dispositif selon la revendication 12, caractérisé en ce que tous les récipients sont des cylindres annulaires emboîtés les uns dans les autres avec des pistons annulaires déplaçables dans ceux-ci, et que sont prévus dans un espace creux cylindrique central entourant les cylindres annulaires emboîtés, des moyens agissant sur l'accouplement mécanique pour le déplacement simultané de tous les pistons conjointement, et que ces moyens de déplacement comportent de préférence un cylindre sous pression ou un dispositif de déplacement réalisé à la manière d'une presse à vis.

15. Dispositif selon l'une des revendication 1 à 14, caractérisé en ce que des moyens sont prévus pour refroidir le dispositif de mélange (8; 60) et de préférence également pour refroidir les moyens en liaison avec la source de moyen d'étanchement (1;41) pour amener le moyen d'étanchement à l'endroit à rendre étanche.

16. Dispositif selon la revendication 15, caractérisé en ce que les moyens de refroidissement comportent des moyens pour produire un flux d'air, de préférence un flux d'air sous pression, et des moyens pour faire passer le flux d'air devant le dispositif de mélange (8; 60) et de préférence également devant les moyens pour amener le moyen d'étanchement à l'endroit à rendre étanche, et en ce que sont prévus en outre de préférence des moyens pour amener un liquide au flux d'air pour produire un froid dû à l'évaporation.

17. Dispositif selon l'une des revendications 1 à 16, caractérisé en ce que les pistons (3,5;44,47) déplaçables dans les cylindres (2,4;42,43) sont constitués d'une matière synthétique élastique, et que les surfaces de piston (9,10;48,49) de ceux-ci présentent au voisinage de leur bord extérieur un creux annulaire (74,75; 76,77,78) de telle sorte que la zone d'extrémité de la paroi de piston délimitant le creux (74,75;76,77,78) vers l'extérieur, lors du déplacement du piston (3,5;44,47) et de la pression ainsi provoquée des composants de moyen d'étanchement sur la délimitation extérieure du creux (74,75;76,77,78) est poussé étroitement contre la paroi de cylindre et que de ce fait, un écoulement des composants du moyen d'étanchement est pratiquement empêché entre la paroi de piston et la paroi de cylindre.

18. Procédé pour rendre étanche une canalisation en utilisant un dispositif selon l'une des revendication 1 à 17 où le moyen d'étanchement est préparé seulement à l'intérieur de la canalisation au et respectivement aux endroits à rendre étanches par un mélange des composants de moyen d'étanchement.

19. Procédé selon la revendication 18, caractérisé en ce qu'on prépare respectivement seulement la quantité de moyen d'étanchement par un mélange de quantités correspondantes de composants de moyen d'étanchement qui sera utilisée réellement à l'endroit à rendre étanche.
